(19) Europäisches Patentamt
European Patent Office
Office européen des brevets

(11) **EP 1 026 618 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.$^7$: **G06K 7/08**, G06K 7/10

(21) Anmeldenummer: **00102402.5**

(22) Anmeldetag: **03.02.2000**

(54) **Transponder-Leseeinrichtung**

Transponder reading device

Dispositif de lecture de transpondeur

(84) Benannte Vertragsstaaten:
**AT BE CH CY DE DK ES FI FR GB GR IE IT LI LU MC NL PT SE**

(30) Priorität: **05.02.1999 DE 19904752**

(43) Veröffentlichungstag der Anmeldung:
**09.08.2000 Patentblatt 2000/32**

(73) Patentinhaber: **MOBA-Mobile Automation GmbH 65604 Elz (DE)**

(72) Erfinder:
• **Schmidt, Andreas**
**01309 Dresden (DE)**
• **Süss, Matthias**
**01309 Dresden (DE)**

(74) Vertreter: **Schoppe, Fritz**
**Schoppe, Zimmermann, Stöckeler & Zinkler**
**Patentanwälte**
**Postfach 246**
**82043 Pullach bei München (DE)**

(56) Entgegenhaltungen:
**FR-A- 2 745 928**

• **"DUAL-LOOP ANTENNA FOR VEHICLE ELECTRONIC KEY SYSTEM" , RESEARCH DISCLOSURE, KENNETH MASON PUBLICATIONS, HAMPSHIRE, GB, NR. 329, PAGE(S) 679 XP000226241 ISSN: 0374-4353 * das ganze Dokument ***

**Beschreibung**

Die vorliegende Erfindung bezieht sich auf eine Transponder-Leseeinrichtung, die ein sicheres Identifizieren eines Transponders ermöglicht.

Transponder sind Sende/Empfangsgeräte, die üblicherweise ohne eigene Energieversorgung auskommen. Transponder werden durch ein elektromagnetisches Hochfrequenzfeld angesprochen und beziehen ihre Betriebsenergie durch Gleichrichtung des Hochfrequenzfeldes. Sie sind üblicherweise konfiguriert, um ansprechend auf ein bestimmtes Empfangssignal eine bestimmte Funktion auszuführen. Diese Funktion kann beispielsweise darin bestehen, daß sie wiederum eine ihnen zugeordnete Identifikationskennung aussenden, daß sie einen ihnen zugeordneten Speicher beschreiben, oder daß sie irgendein anderes Signal aussenden, das wiederum von einem Empfänger empfangen werden kann und demselben Kenntnis über eine bestimmte Eigenschaft des Transponders verschafft.

In jüngster Zeit haben sich sehr preisgünstige Transponder auf dem Markt verbreitet, die beispielsweise in Etiketten eingearbeitet werden können, um einen Gegenstand zu identifizieren, auf dem das Etikett angeordnet bzw. aufgeklebt ist. Hier ist beispielsweise an die Postverteilung zu denken. Auf Paketen ist zwar eine für den Menschen lesbare Adresse aufgeklebt, die eigentliche Verteilung kann jedoch mittels eines in diesem Etikett untergebrachten Transponders durchgeführt werden, der durch ein geeignetes Lesegerät angesprochen werden kann. Ein solches Etikett mit einem elektronischen Transponder ist dann hinfällig, wenn das Paket ausgeliefert worden ist und das Etikett gewissermaßen zerbrochen wird. Solche Transponder müssen sehr preisgünstig sein, da sie Einwegartikel sind.

Bei dem dargestellten Postverteilungsszenario kann ein auf einem Paket aufgebrachter Transponder zu Anfang initialisiert werden, um beispielsweise durch eine Seriennummer auf ein spezielles Paket hinzuweisen. Alternativ könnte der Transponder auf eine bestimmte Frage-Datensequenz die Bestimmungsadresse des Pakets ausgeben. Ein solches Paket wird, wenn es bei einem Postamt abgegeben wird, über mehrere Verteilerstellen bis zu dem Adressaten laufen. Als Beispiel für ein Beschreiben des Transponders könnte der über die Etikette dem Paket zugeordnete Transponder bei jeder Verteilerstelle mit einem bestimmten Code beschrieben werden, um den Weg des Pakets nachzuverfolgen. Ein Beispiel für das Beschreiben eines Transponders ist selbstverständlich auch die Anfangsinitialisierung, d. h. die ursprüngliche Eingabe der Zieladresse.

In einer Paketverteilerstelle laufen sehr viel mit Transpondern bestückte Pakete auf dem Förderband. Eine Lesevorrichtung kann die Transponder der einzelnen Pakete aktivieren, um ihre Zieladresse zu ermitteln, um dieselben von dem Hauptförderband weg geeignet zu verteilen.

Solche Transponder werden hauptsächlich als Identifikationssysteme verwendet. Überall, wo bestimmte Gegenstände automatisch identifiziert werden sollen, können derartige preisgünstige Identifikations-Transponder, z. B. in Etiketten eingesetzt, zum Einsatz kommen.

Für den Entwurf von Antennenanordnungen für Transponder-Lesegeräte existieren einige Randbedingungen. Eine Antennenanordnung muß einerseits eine ausreichend große Felddichte erzeugen, damit der Transponder genügend elektrische Energie aus dem Antennenfeld "ziehen" kann. Darüberhinaus existieren bestimmte Frequenzbänder, die für solche Funksysteme freigegeben sind. Schließlich existiert eine wesentliche Randbedingung für solche Antennenanordnungen darin, daß die Dimensionen z. B. des Förderbands oder auch der Objekte, die mit Transpondern bestückt sind, fest vorgegeben sind und keine Möglichkeit besteht, die Objekte bzw. Fördereinrichtungen an Antennengeometrien anzupassen, sondern daß vielmehr die Antennengeometrien an bestehende Förderbänder und bestehende Objektgrößen angepaßt werden müssen. Um beim Beispiel der Paketverteilung zu bleiben, muß es möglich sein, auch Pakete mit einer Höhe von bis zu 90 cm verarbeiten zu können. Die Paketgröße kann nicht aufgrund einer Antennengeometrie verändert werden, sondern die Antennengeometrie hat sich an die Paketgröße und auch an bestehende Förderbandeinrichtungen unbedingt anzupassen. Außerdem können die Etiketten allgemein an beliebigen Stellen auf dem Paket sein.

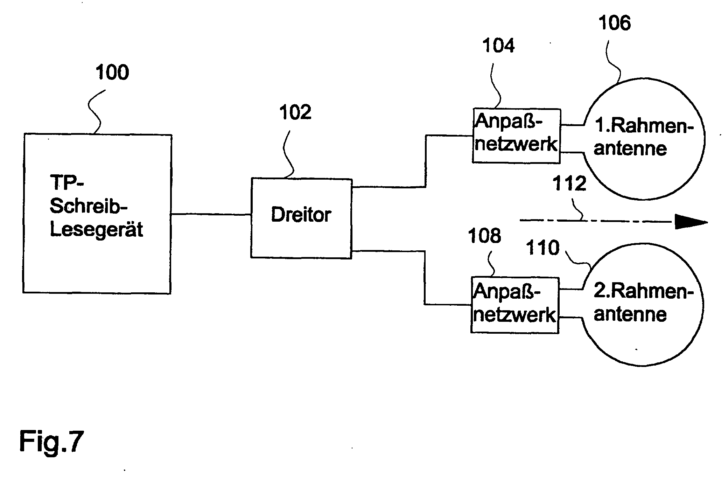

Fig. 7 zeigt eine bekannte Ausführung einer Antennenanordnung samt Beschaltung, um an Objekten angebrachte Transponder auf einem Förderband auszulesen bzw. mit denselben zu kommunizieren. Die Anordnung umfaßt ein Transponder-Lesegerät 100, das elektrische Signale liefert, die zu den Transpondern gesendet werden sollen, bzw. das elektrische Signale von den Transpondern empfängt. Dies geschieht über eine Dreitorschaltung 102, die an ihren beiden Ausgangstoren jeweils ein erstes Anpaßnetzwerk 104 für eine erste Rahmenantenne 106 und ein zweiten Anpaßnetzwerk 108 für eine zweite Rahmenantenne 110 aufweist. Die beiden Rahmenantennen 106 und 110 sind bei der bekannten Anordnung links bzw. rechts bezüglich einer Förderrichtung 112, die in Fig. 7 als gestrichelter Pfeil symbolisiert ist, angeordnet. Damit auch hohe bzw. große Pakete in Verbindung mit der in Fig. 7 gezeigten Anordnung verwendet werden können, müssen die beiden separaten Rahmenantennen beträchtliche Dimensionen erhalten.

Weiterhin muß berücksichtigt werden, daß auch die Geometrie des Förderbandes, das durch den gerichteten Pfeil 112 symbolisch dargestellt ist, fest vorgegeben ist und ebenfalls beträchtliche Ausmaße annehmen kann. Damit auch Transponder in der Mitte des Förderbands ausgelesen werden können, ist es nötig, die Antenne mit ausreichend Energie zu versorgen.

Insbesondere muß die Feldstärke auf ein zulässiges Maximum begrenzt sein, das durch nationale Behörden des Landes festgelegt ist, in dem die Anlage betrieben wird.

Weiterhin ist es erforderlich, daß die beiden Anpaßnetzwerke 104 und 108 eng aufeinander abgeglichen werden müssen, damit die Transpondersignale korrekt empfangen werden können und vom Transponder-Lesegerät 100 möglichst fehlerfrei ausgewertet werden können.

Im nachfolgenden ist eine übliche Näherungsformel für die Induktivität einer Rahmenantenne angegeben, wie sie für die Rahmenantennen 106 und 110 gelten dürfte.

$$L = 2 \cdot u \cdot (\ln(u/D) - Kq) \cdot (N)^{1,8}$$

In dieser Gleichung haben die einzelnen Parameter folgende Bedeutung:

u     Umfang der Antennenschleife [cm]
D     Leiterzugbreite oder Durchmesser [cm]
Kq    Korrekturfaktor, der die Antennenform berücksichtigt (für quadratische Antennen beträgt Kq 1,47, für kreisförmige Antennen beträgt Kq 1,07)
N     Windungszahl
L     Antenneninduktivität [nH]

Die Resonanzfrequenz ist durch folgende Gleichung gegeben:

$$f = 1/(2 \cdot \pi \cdot \sqrt{C \cdot L})$$

Ein Vergrößern des Umfangs einer Rahmenantenne führt, wie es aus der Gleichung für die Antenneninduktivität ersichtlich ist, zur Vergrößerung der Induktivität. Mit dem Vergrößern der Leiterzugbreite kann jedoch aufgrund der Logarithmus-Funktion nur begrenzt dem Anwachsen der Induktivität entgegengewirkt werden. Ferner führt eine Erhöhung der Anzahl der Windungen ebenfalls zu einer Erhöhung der Induktivität.

Eine hohe Induktivität ist jedoch für einen stabilen Antennenbetrieb nicht wünschenswert, wenn die Rahmenantennen bei Frequenzen über 10 MHz betrieben werden müssen. Aufgrund der Gleichung für die Resonanzfrequenz wird deutlich, daß bei sehr großen Antennen die Antennenkapazität sehr klein wird, typischerweise kleiner als 100 pF, um die geforderte Betriebsfrequenz zu erreichen. Da aber Streukapazitäten und die Eigenkapazität der Induktivität schon diesen Wert erreichen können, ist eine stabile Konfiguration und Abstimmung eines solchen Schwingkreises nicht mehr möglich. Besonders bei Transponder-Lesegeräten stellen die Streukapazitäten ein wesentliches Problem dar, da die Antennen einerseits groß sein müssen und andererseits sehr viele ständig variierenden Streukapazitäten einerseits durch Objekte unterschiedlicher Größe und andererseits durch die ständig variierende Umgebung in einem Postverteilungszentrum neben einem Förderband existieren. Um von den Streukapazitäten unabhängig zu werden, muß die Antenne mit einer Kapazität beschaltet werden, die deutlich höher als die Streukapazitäten ist, derart, daß variable Streukapazitäten nur noch vernachlässigbare Auswirkungen auf den Antennenbetrieb haben. Wenn jedoch die Induktivität der Antenne bereits sehr groß ist, würde es nicht mehr möglich sein, eine besonders große Kapazität zu der Antenne zu schalten, um eine bestimmte Betriebsfrequenz im Bereich zwischen 10 und 20 MHz zu erreichen. Daher besteht die Anforderung, die Induktivität der Antenne möglichst klein zu halten, damit eine möglichst große fest definierte Kapazität mit der Antenne verschaltet werden kann.

Ferner sollen solche Antennenanordnungen nicht zu teuer sein und im Betrieb einfach sein, damit auch Personen, die nicht ausgewiesene Spezialisten sind, eine solche Anlage betreiben können und sogar kleinere Abstimmungen durchführen können.

Aus der FR 2 745 928 ist eine Transponder-Lesevorrichtung bekannt, die ein Führungseinrichtung aufweist, wobei sich eine Antenne, die durch zwei seriell verschaltete Spulen gebildet ist, auf beiden Seiten der Führungseinrichtung erstreckt. Ferner ist eine Abschirmung vorgesehen, die Schlitze aufweist, durch die die Funktionalität einer magnetischen Antenne erreicht wird.

In XP000226241 (Research Disclosure, Kenneth Mason Publications, September 1991, No. 329, Hampshire, GB) ist eine Antenne beschrieben, durch die ein gleichförmiges Feld um ein Fahrzeug für ein elektronisches Verriegelungssystem erzeugt werden soll. Zu diesem Zweck sind zwei koplanare Solenoidschleifen vorgesehen, deren Enden derart verbunden sind, daß der Strom durch die Schleifen in gegensinnige Richtugnen fließt.

Aus der WO 8602186 ist eine Identifikationssystem bekannt, das eine Sendereinheit und eine Sensoreinheit aufweist. Zwei Antennenschleifen sind angeordnet, so daß dieselben die Richtung von Objekten, die passieren, erfassen können und ferner Totzonen, in denen eine Erfassung nicht möglich ist, vermieden werden. Zu erfassende Objekte umfassen Etiketten, die Resonanzschaltungen aufweisen, die auf unterschiedliche Frequenzen abgestimmt sind. Der für die Erfassung wesentliche Aspekt besteht dabei darin, daß die Etiketten durch die geschlossenen Antennenschleifen bewegt werden.

Die Aufgabe der vorliegenden Erfindung besteht darin, eine Transponder-Leseeinrichtung zu schaffen, die eine zuverlässige Kommunikation mit Transpondern ermöglicht.

Diese Aufgabe wird durch eine Transponder-Leseeinrichtung nach Patentanspruch 1 gelöst.

Der vorliegenden Erfindung liegt die Erkenntnis zugrunde, daß von der Verwendung zweier Rahmenantennen, die zwar jeweils, um ihre Induktivitäten möglichst gering zu halten, nur eine Windung aufweisen, die jedoch zusammen bei entsprechender für Transpondersysteme notwendiger Ansteuerung doch zwei Windungen darstellen, Abstand genommen werden muß, um eine ausreichend große Antenne zu erhalten, die bei den geforderten Betriebsfrequenzen trotz ihrer Größe sicher betrieben werden kann. Im Gegensatz zum Stand der Technik wird eine einzige geschlossene Antennenwindung verwendet und in Form einer "gefalteten Acht" angeordnet, derart, daß eine erste Teilschleife (der obere "Kreis" der Zahl 8) und eine zweite Teilschleife (der untere "Kreis" der Zahl 8) entsteht, die jedoch nicht in einer einzigen Ebene angeordnet sind, sondern in jeweiligen Ebenen, die sich in einem spitzen Winkel schneiden oder parallel sind. Die Speisung der Antennenanordnung für die erfindungsgemäße Transponderleseeinrichtung findet in der Mitte, also dem "Knoten" der "Acht" statt, so daß sich eine Parallelschaltung der zwei Teilschleifen ergibt, die jedoch zusammen lediglich eine einzige Windung ergeben. Die Speisung der beiden Teilschleifen erfolgt somit automatisch identisch, derart, daß nur ein Anpaßnetzwerk benötigt wird, da die beiden Teilschleifen automatisch aufeinander abgestimmt sind. Durch die erfindungsgemäße Anordnung, die lediglich eine einzige Windung umfaßt, aus der die beiden Teilschleifen gebildet sind, kann die Induktivität der gesamten Antennenanordnung möglichst klein gehalten werden. Somit sind wesentlich größere Schleifenquerschnitte realisierbar.

Bei einem bevorzugten Ausführungsbeispiel der vorliegenden Erfindung wird die einzige Windung zusätzlich zwischen der oberen Teilschleife und der unteren Teilschleife überkreuzt, derart, daß die Stromflußrichtungen in den beiden Teilschleifen, die in zwei übereinander liegenden Ebenen angeordnet sind, entgegengesetzt sind, was zu einer gegensinnigen Orientierung der durch die beiden Teilschleifen erzeugten Felder führt, wodurch sich um die Antennen herum ein möglichst inhomogenes Magnetfeld ergibt, derart, daß Transponder in im wesentlichen beliebigen Ausrichtungen identifiziert werden können.

Alternativ kann jedoch auf die Überkreuzung verzichtet werden, wodurch sich eine gleichsinnige Stromflußrichtung in den beiden Teilschleifen ergibt. Damit ist das Feld zwar homogener als im Fall mit gegensinnigen Stromflußrichtungen, dies kann jedoch durch eine entsprechende Schrägstellung der Antenneneinrichtung bezüglich einer Transporteinrichtung ausgeglichen werden.

An dieser Stelle sei darauf hingewiesen, daß grundsätzlich jede Drehung der Antennenanordnung in den drei Achsen bezüglich der Transporteinrichtung möglich ist. Genauso ist eine Verdrehung der beiden Teilschleifen zueinander in allen drei Achsen möglich, solange sich die Teilschleifen gegenüberliegen und die angenäherten ebenen Flächen zueinander parallel sind oder sich in einem spitzen Winkel schneiden.

Qualitativ kann festgestellt werden, daß eine gute Kommunikation zwischen einer Sende- und einer Empfangsantenne möglich ist, wenn die von den beiden Antennen erzeugten Feldlinien im wesentlichen parallel verlaufen. Andererseits wird eine schlechte bzw. überhaupt keine Kommunikation zwischen einer Sende- und einer Empfangsantenne möglich, wenn die von den beiden Antennen erzeugten Feldlinien senkrecht aufeinander stehen. Obwohl die zu identifizierenden Objekte, die mit Transpondern bestückt sind, zwar unter Umständen in gewisser Weise vor-ausgerichtet sind, muß trotzdem sichergestellt werden, daß Transponder mit beliebiger Ausrichtung gelesen werden können, was nur erreicht werden kann, wenn das Antennenfeld, in dem sich der Transponder befindet, möglichst inhomogen ist, bzw., wenn die Transponder entlang einer bestimmten Strecke, d. h. in einem Lesebereich, bewegt werden, entlang der sich das Feld der Antennenanordnung räumlich stark ändert.

Da bei der Antennenanordnung der erfindungsgemäßen Transponder-Leseeinrichtung im Vergleich zu einer einfachen Rahmenantenne der Umfang einer Teilschleife ohne eine so starke Auswirkung auf die Induktivität wesentlich größer gemacht werden kann, ist es nicht nur möglich, Objekte zwischen den beiden Teilschleifen durch zu bewegen, sondern auch durch die Teilschleifen selbst hindurch zu bewegen. Damit werden die Transponder in den Nahbereich der Antenne gebracht. Dies bedeutet, daß die Leseabstände geringer als bei der bekannten Antenne von Fig. 7 sind, die in einschlägigen Kreisen auch als "Gateantenne" bezeichnet wird. Ein bevorzugtes Ausführungsbeispiel der vorliegenden Erfindung unterstützt damit Systeme mit geringeren Reichweiten, d. h. geringeren Sendeleistungen sowohl der Antenne, als auch, was vielleicht noch entscheidender ist, des Transponders selbst, der ja keine eigene Energieversorgung hat, sondern die Sendeenergie aus dem HF-Feld der Antennenanordnung beziehen muß.

Ein weiterer besonderer Vorteil der vorliegenden Erfindung besteht darin, daß allein durch die geometrische Anordnung der beiden Teilschleifen zueinander bzw. zu dem Lesebereich Feld-Nullstellen derart manipuliert werden können, daß es im Lesebereich im wesentlichen keine "toten" Bereiche gibt, d. h. Bereiche, wo keine Magnetfelder sind, wobei besonders darauf hinzuweisen ist, daß dies für sämtliche Transponder-Ausrichtungen bezüglich der Antennen bzw. des Lesebereichs gilt.

Bevorzugte Ausführungsbeispiele der vorliegenden Erfindung werden nachfolgend bezugnehmend auf die beigefügten Zeichnungen detailliert erläutert. Es zeigen:

Fig. 1      eine Antennenanordnung für eine Transponder-Leseeinrichtung gemäß einem bevorzugten Ausführungsbeispiel der vorliegenden Erfindung;

Fig. 2a     eine "aufgefaltete" Darstellung der Antennenanordnung von Fig. 1;

Fig. 2b     schematische Seitenansichten verschiedener Antennenanordnungen für eine erfindungsgemäße Transponder-Leseeinrichtung;

Fig. 3     ein schematisches Diagramm der Feldverteilung der in Fig. 1 dargestellten Antennenanordnung, um die Identifikation unterschiedlich ausgerichteter Transponder zu veranschaulichen;

Fig. 4     eine erfindungsgemäße Transponder-Leseeinrichtung mit einer erfindungsgemäßen Antennenanordnung in einer bestimmten Ausrichtung bezüglich des Lesebereichs;

Fig. 5     eine erfindungsgemäße Transponder-Leseeinrichtung mit einer anderen Ausrichtung der Antennenanordnung bezüglich des Lesebereichs;

Fig. 6     eine erfindungsgemäße Transponder-Leseeinrichtung mit einer alternativen Ausrichtung der Antennenanordnung bezüglich des Lesebereichs; und

Fig. 7     eine Ausgestaltung einer bekannten Transponder-Leseeinrichtung mit zwei voneinander getrennten Rahmenantennen und zwei Anpaßnetzwerken.

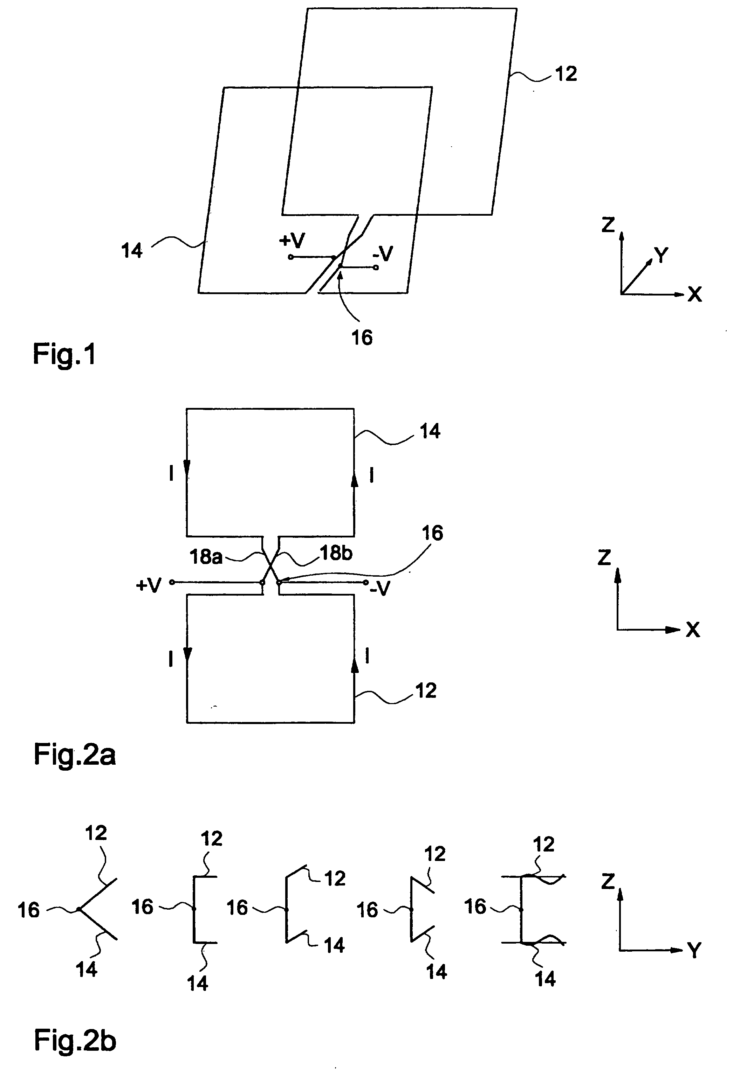

Fig. 1 zeigt eine schematische perspektivische Darstellung einer erfindungsgemäßen Antennenanordnung gemäß einem bevorzugten Ausführungsbeispiel der vorliegenden Erfindung. Die Antennenanordnung weist eine erste Teilschleife 12, eine zweite Teilschleife 14 sowie eine einzige Speiseeinrichtung 16 auf. Rechts in Fig. 1 ist das Bezugskoordinatensystem angedeutet. Damit wird deutlich, daß bei der gezeigten Darstellung die erste Teilschleife 12 in der xz-Ebene angeordnet ist, und zwar bei einer ersten y-Koordinate. Analog dazu befindet sich die zweite Teilschleife 14 ebenfalls in einer xz-Ebene, jedoch bei einer anderen y-Koordinate als die erste Ebene, d. h. die erste Teilschleife 12. Aus Fig. 1 ist ferner zu sehen, daß die beiden Ebenen, in denen die beiden Teilschleifen liegen, im wesentlichen parallel zueinander sind. Dies stellt jedoch lediglich ein bevorzugtes Ausführungsbeispiel dar. Die beiden Teilschleifen könnten derart bezüglich der yz-Ebene gekippt sein, daß sich die beiden Ebenen, die durch die beiden Teilschleifen 12 und 14 definiert sind, in einem spitzen Winkel schneiden. Eine Anordnung, bei der die beiden Teilschleifen 12, 14 in derselben Ebene liegen, d. h. eine nicht-gefaltete Acht, bringt jedoch nicht den erfindungsgemäßen Nutzen, da die beiden Teilschleifen, die nicht gegenüberliegend angeordnet sind, kein gedachtes Volumen definieren, durch das zu identifizierende Transponder hindurchbewegt werden können bzw. in das zu identifizierende Transponder eingebracht werden können. Bei einer Antenne in Form einer nichtgefalteten, stehenden Acht ist dies nicht der Fall.

Damit wird jedoch auch deutlich, daß die beiden Teilschleifen nicht nur ebene Rechtecke oder ebene kreisförmige Rahmen sein müssen, sondern auch beliebig geformte konvexe und/oder konkave Flächen definieren können. Die erste Teilschleife und die zweite Teilschleife müssen lediglich derart zueinander positioniert sein, daß ebene Flächen, die an beliebige konvexe oder konkave durch die erste und die zweite Teilschleife definierte Flächen angenähert sind, zueinander parallel sind oder sich in einem spitzen Winkel schneiden. Nur damit wird zwischen den beiden beliebig geformten Teilschleifen 12, 14, die beliebig einander gegenüberliegend angeordnet sind, ein gedachtes Volumen definiert, durch das zu identifizierende Transponder hindurchbewegt werden können, bzw. in das zu identifizierende Transponder eingebracht werden können.

In Fig. 1 ist ferner zu sehen, daß die beiden Teilschleifen 12, 14 durch Überkreuzung der Leiter in der Nähe des Speisungspunkts so gespeist werden, daß sich eine gegensinnige Stromflußrichtung in den beiden Teilschleifen 12, 14 ergibt. Damit wird auf vorteilhafte Art und Weise eine besondere Inhomogenität zwischen den beiden Teilschleifen 12, 14, also in dem gedachten Volumen, erzeugt. Alternativ könnte jedoch die Überkreuzung nicht vorhanden sein, derart, daß eine gleichsinnige Stromflußrichtung zwischen den beiden durch eine einzige Stelle gespeisten Teilschleifen 12, 14 vorhanden ist. Auch hier wird der erfindungsgemäße Vorteil erreicht, daß die Fläche, die durch die Teilschleifen 12, 14 umschlossen wird, erhöht werden kann, ohne daß die Induktivität der Antennenanordnung so stark steigt, wie wenn eine analoge Antennenanordnung, die eine einzige Rahmenantenne aufweist, entsprechend dimensioniert wird, um die gleiche Fläche zu umschließen. Damit kann die Induktivität der Antennenanordnung in Grenzen gehalten werden, was dazu führt, daß relativ große Schaltungskapazitäten eingesetzt werden können, um einen von Streukapazitäten möglichst unabhängigen Antennenbetrieb erhalten zu können.

Fig. 2a zeigt eine aufgefaltete Darstellung der Antennenanordnung von Fig. 1. Ferner sind die Stromflußrichtungen, d. h. die mit I bezeichneten Pfeile, in den beiden Teilschleifen 12, 14 eingezeichnet. Wie in Fig. 1 ist in Fig. 2a die Situation gezeigt, bei der die beiden gegenüberliegenden Teilschleifen gegensinnige Stromflußrichtungen haben, was durch Überkreuzung der Leiterbereiche 18a und 18b im Speisungsbereich zwischen den beiden Teilschleifen erreicht wird. Alternativ könnte jedoch auf eine Überkreuzung verzichtet werden, was bildlich gesprochen einfach dadurch erreicht wird, wenn beispielsweise die obere Teilschleife 14 um die z-Achse um 180 Grad gedreht wird. Wird dagegen auf die Überkreuzung verzichtet, so ergibt sich eine gleichsinnige Stromflußrichtung in den beiden Teilschleifen

Aus den Fig. 1 und 2a ist deutlich zu sehen, daß die beiden Teilschleifen 12, 14 sowie die beiden Leiterstücke 18a, 18b zusammen eine einzige Windung bilden, wobei diese Windung derart geformt ist, daß sich die beiden Teilschleifen 12, 14 ergeben, und wobei die beiden Teilschleifen, die selbst analog zu einer Rahmenantenne geformt sind, derart, daß sie eine Fläche im wesentlichen, d. h. bis auf den Bereich in der Nähe der ersten und zweiten Enden, der der Speisungsbereich ist, umschließen, durch die einzige Speisungseinrichtung 16 gespeist werden.

Fig. 2b zeigt schematisch mögliche Seitenansichten für eine erfindungsgemäße Antennenanordnung. Wie es rechts von Fig. 2b dargestellt ist, ist dies eine Draufsicht auf die yz-Ebene. Ganz links in Fig. 2b ist eine allgemeine Antennenanordnung mit der ersten und zweiten Teilschleife 12, 14 und einer Speisungseinrichtung 16 gezeigt, bei der die Leiter 18a, 18b (Fig. 2a) nicht vorhanden sind. Fig. 2b zeigt die Seitendraufsicht auf die in Fig. 1 dargestellte Antennenanordnung. Die dritte Draufsicht von links zeigt eine gegenüber der in Fig. 1 dargestellten Antennenanordnung modifizierte Anordnung, bei der die beiden Flächen, die durch die Teilschleifen 12, 14 definiert sind, zueinander parallel sind, jedoch zu den Leiterstücken 18a, 18b (Fig. 2b) nicht senkrecht angeordnet sind. Das zweite Teilbild von rechts in Fig. 2b zeigt noch eine andere Konfiguration, bei der sich die beiden Flächen, die durch die Teilschleifen definiert sind, fiktiv in einem spitzen Winkel schneiden und ferner einen spitzen Winkel zu den Leiterstücken 18a, 18b haben. Die Darstellung ganz rechts in Fig. 2b soll symbolisieren, daß die beiden Teilschleifen 12, 14 nicht zwingend ebene Flächen umfassen müssen, sondern daß die Flächen, die durch die Teilschleifen 12, 14 umschlossen werden, beliebig konvex und/oder konkav sein können, wobei sich die Flächen, die durch die beiden Teilschleifen 12, 14 umschlossen werden, auch voneinander unterscheiden können. In diesem Fall kann gesagt werden, daß zwei an die Flächen, die durch die Teilschleifen umschlossen werden, angenäherte ebene Flächen, die in dem ganz rechten Teilbild von Fig. 2b gestrichelt eingezeichnet sind, parallel sein müssen oder sich in einem spitzen Winkel schneiden müssen, um den erfindungsgemäßen Vorteil der begrenzten Induktivitätszunahme bei zunehmenden Abmessungen zu erreichen.

Aus den einzelnen Teilbildern von Fig. 2b ist somit deutlich zu sehen, daß die beiden Teilschleifen 12, 14 einander gegenüberliegend angeordnet sind, derart, daß sich gewissermaßen zwischen denselben ein gedachtes Volumen ergibt, in dem die Felder der beiden Teilschleifen, die erzeugt werden, wenn die beiden Teilschleifen gespeist werden, in Wechselwirkung sind. Aus Fig. 2b ist ferner ersichtlich, daß das magnetische Feld, das zwischen den gegenüberliegenden Teilschleifen 12, 14 vorliegt, umso stärker ist, je näher die beiden Teilschleifen zueinander angeordnet sind, wenn die gleiche Speiseleistung geliefert wird. Wie es später ausgeführt werden wird, kann jedoch durch die Speiseleistung einerseits und den Abstand der Teilschleifen 12, 14, wenn die in Fig. 1 dargestellte Antenne betrachtet wird, andererseits, eine flexible Lösung für Transponder-Lesegeräte mit einem sich kontinuierlich bewegendem Förderband geschaffen werden. Die Speiseleistung und der Abstand der Teilschleifen können an jede beliebige Bandgeschwindigkeit angepaßt werden. Wenn ferner bedacht wird, daß die Transponder üblicherweise gemäß einem bestimmten Signalisierungsprotokoll antworten, das eine bestimmte Zeit benötigt, um gesendet zu werden, wobei sichergestellt werden muß, daß sich der Transponder, während er sein Antwortsignal sendet, in dem Lesebereich der Antennenanordnung ist, ist es besonders vorteilhaft, daß der Abstand der beiden Teilschleifen und die Bandgeschwindigkeit optimal aufeinander abgestimmt werden können.

Aus den Fig. 1 und 2a wird ferner deutlich, daß es bevorzugt wird, die Antennenanordnung symmetrisch zu speisen. Dies geschieht bevorzugterweise mittels eines Baluns, das einen unsymmetrischen HF-Eingang hat, der normalerweise eine Impedanz von 50 n hat, und das zwei symmetrische Ausgänge (+V und -V) hat, die mit der Speisungseinrichtung der Antennenanordnung, d. h. mit den Speisungsanschlüssen bevorzugterweise in der Mitte der einzigen Windung, aus der die erfindungsgemäße Antennenanordnung geformt ist, verbunden sind.

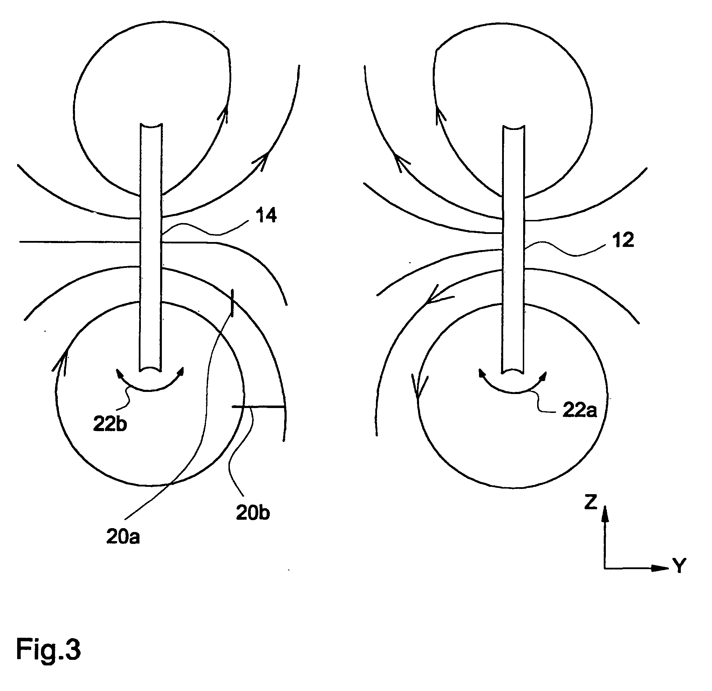

Fig. 3 zeigt eine Draufsicht auf die erfindungsgemäße Antennenanordnung in ihrer in Fig. 1 gezeigten bevorzugten Ausgestaltung mit parallel gegenüberliegenden Teilschleifen 12, 14, die ferner gegensinnig gespeist sind, was durch die Überkreuzung der Leiterstücke 18a, 18b (Fig. 2a) erreicht wird. Fig. 3 zeigt ferner einen ersten Transponder 20a und einen zweiten Transponder 20b, die parallel zu der z-Richtung zwischen den beiden Teilschleifen 12, 14 hindurch bewegt werden. Die beiden Transponder 20a und 20b haben eine unterschiedliche Ausrichtung, d. h. der erste Transponder 20a ist parallel zur z-Richtung ausgerichtet, während der zweite Transponder 20b parallel zur y-Richtung ausgerichtet ist. Aufgrund des stark inhomogenen Feldes zwischen den beiden Teilschleifen 12, 14 können die Transponder mit beiden Ausrichtungen gut identifiziert werden. Insbesondere können Transponder, wie es für Fachleute bekannt ist, gut identifiziert werden, wenn gedachte Feldlinien eines Transponders und gedachte Feldlinien der Antennenanordnung im wesentlichen parallel zueinander sind. In diesem Fall ist eine gute transformatorische Kopplung gewährleistet. Eine schlechte Transponderidentifizierung tritt auf, wenn die Feldlinien von Transponder und Antennenanordnung im wesentlichen senkrecht aufeinander "auftreffen". Hier findet praktisch keine Beeinflussung statt. Ein so positionierter Transponder wird daher nicht gut identifiziert werden können. Daher ist es, um beliebige Ausrichtungen von Transpondern bezüglich der Antennenanordnung verarbeiten zu können, wichtig, daß stark inhomogene Felder vorliegen.

Obwohl Fig. 3 eine Situation zeigt, bei der die Transponder zwischen den beiden Teilschleifen 12, 14 hindurch bewegt werden, wird es gemäß einem anderen Ausführungsbeispiel der vorliegenden Erfindung bevorzugt, die Transponder 20a, 20b nicht zwischen den Teilschleifen 12, 14 hindurch zu führen, sondern durch die Teilschleifen 12, 14 selbst "durchtauchen" zu lassen, d. h. in der y-Richtung zu bewegen. Die Darstellung von Fig. 3 bezüglich der Identifizierbarkeit der Transponder 20a, 20b, die unterschiedliche Ausrichtungen bezüglich der Antennenanordnung haben, ist analog auf sich in y-Richtung bewegende Transponder, die durch die Flächen durchtreten, die von den Teilschleifen 12, 14 umschlossen werden, anwendbar, da die in Fig. 3 gezeigte Felddarstellung bezüglich der z-Achse und der y-Achse doppelt achsensymmetrisch ist.

Diese doppelte Achsensymmetrie ist jedoch darin problematisch, daß sich eine Nullstelle des magnetischen Feldes dort ergibt, wo sich die beiden Symmetrieachsen schneiden. Aus Fig. 3 ist ferner ersichtlich, daß diese Nullstelle gewissermaßen in der Mitte des Lesebereichs liegt, weshalb dieselbe dann ungünstig ist, wenn sich bei einer Anwendung sich viele Transponder eventuell dort befinden können. Beispielhaft für eine Anwendung, bei der diese Nullstelle keine Rolle spielt, sei der Fall von quaderförmigen Paketen gedacht, die im Querschnitt zwei lange und zwei kurze Seiten haben, und die derart beschaffen sind, daß Transponder lediglich auf den kurzen Seiten der Pakete angebracht sind. In diesem Fall werden sich allein aufgrund der Geometrie der Pakete keine Transponder in der Mitte des Lesebereichs befinden, weshalb die dort befindliche Nullstelle des Feldes keine Rolle spielt.

Sollte es jedoch beabsichtigt sein, Transponder auch in der Mitte zwischen den beiden Teilschleifen 12, 14 auszulesen, so kann das Feld variiert werden, indem die einzelnen Teilschleifen zum Beispiel um den oberen Endpunkt derselben gewissermaßen gedreht werden, wie es durch die beiden Pfeile 22a und 22b dargestellt ist. Damit könnten solche Draufsichten, wie sie in Fig. 2b dargestellt sind, erzeugt werden. Auf diese Art und Weise kann die Nullstelle in der Mitte des Lesebereichs aus demselben herausbewegt werden bzw. an einen Rand desselben gebracht werden, wo sie keine Rolle mehr spielt. Damit ist es deutlich geworden, daß die erfindungsgemäße Antennenanordnung mit zwei gegenüberliegend angeordneten Teilschleifen sehr viel Entwurfsfreiheit liefert, um das Antennenfeld auf die speziell vorliegende Anwendung abzustimmen.

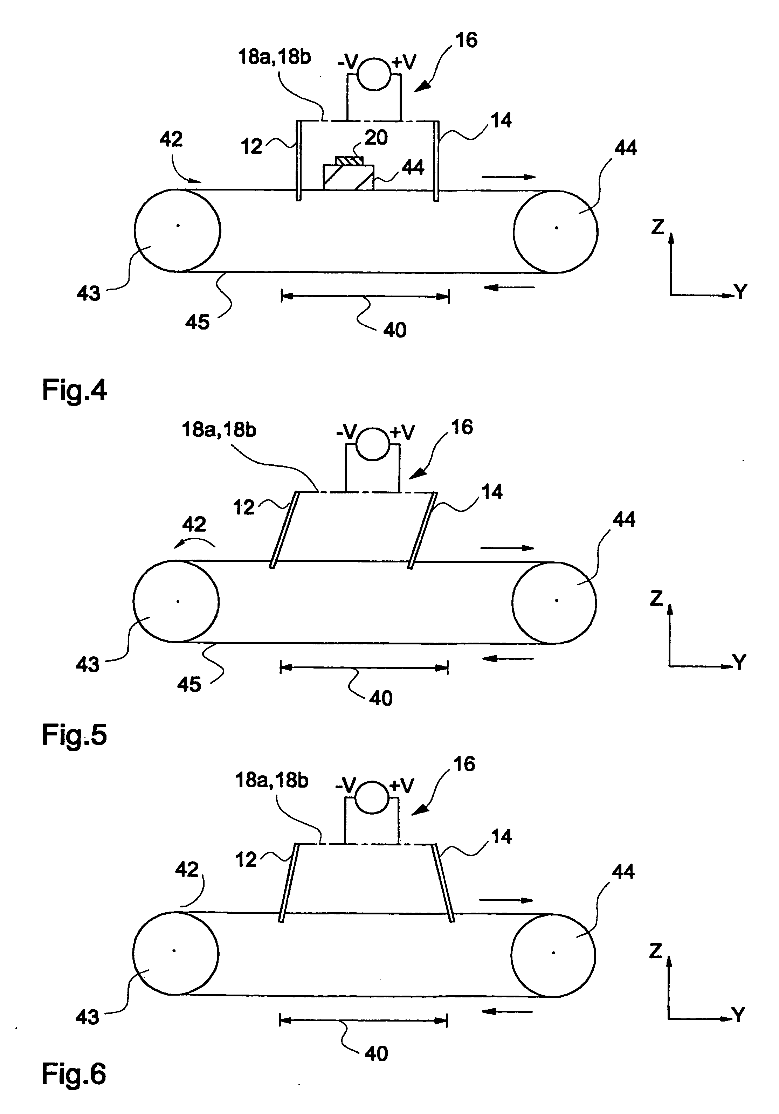

Die Fig. 4 bis 6 zeigen jeweils eine Transponder-Leseeinrichtung, die einen Lesebereich 40, eine Einrichtung 42 zum Transportieren eines Objekts 44, an dem ein Transponder 20 angebracht ist, in den Lesebereich 40 sowie die erfindungsgemäße Antennenanordnung, die in Verbindung mit den Fig. 1, 2a, 2b und 3 beschrieben worden ist, aufweist. Die Antennenanordnung ist derart bezüglich des Lesebereichs 40 angeordnet, daß der Transponder 20 mittels der Antennenanordnung auslesbar ist. Wie es bereits ausgeführt worden ist, umfaßt die Antennenanordnung die erste Teilschleife 12, die zweite Teilschleife 14, bei dem in Fig. 4 gezeigten bevorzugten Ausführungsbeispiel erste und zweite Leiterstücke 18a, 18b, die schematisch als gestrichelte Linie dargestellt sind, die die Antennenteilschleifen 12, 14 verbindet, sowie die einzige Speisungseinrichtung 16. Bei einem bevorzugten Ausführungsbeispiel ist die Transporteinrichtung als Endloseinrichtung ausgebildet, die üblicherweise eine Antriebsrolle 43, eine Mitlaufrolle 44 sowie einen Förderriemen 45 aufweist. Die Fig. 5 und 6 zeigen alternative Positionierungen der Antennenanordnung, bzw. der Teilschleifen 12, 14 bezüglich des Lesebereichs 40, um beispielsweise die Nullstelle, die in Verbindung mit Fig. 3 beschrieben worden ist, an eine andere Stelle des Lesebereichs, wo sie nicht stört, bzw. aus dem Lesebereich 40 heraus zu bringen.

An dieser Stelle sei darauf hingewiesen, daß die Teilschleifen nicht nur um die x-Achse gedreht werden können, sondern daß dieselben um alle drei Achsen gedreht werden können, um Feldnullstellen aus dem Lesebereich zu bringen bzw. um die Feldrichtung wie benötigt zu ändern, um eine sichere Transponderidentifikation zu erreichen.

Aus den Fig. 4 bis 6 wird deutlich, daß die Speisungseinrichtung 16 möglichst weit von der Transporteinrichtung 42, die üblicherweise eine Vielzahl von metallischen Komponenten aufweist, weg positioniert ist. Damit können die Streukapazitäten, die zu einem instabilen Betrieb der Antenne führen können, weiter reduziert werden, da eine Spannungsspeisung verwendet wird, derart, daß das Spannungsmaximum am Speisepunkt herrscht, während das Spannungsminimum in dem Bereich der Teilschleifen 12, 14 vorhanden ist, der dem Speisungspunkt gegenüberliegt. Somit ist der Speisungsbereich für Spannungseinkopplungen, und damit Streukapazitäten, wesentlich anfälliger als der Bereich der Antennenanordnung, wo das Spannungsminimum herrscht. Als wichtige Entwurfsregel für Transponder-Leseanordnungen kann somit festgehalten werden, daß das "heiße" Ende der Antennenanordnung möglichst weit von metallischen Komponenten entfernt positioniert werden sollte, während das "kalte" Ende ohne wesentliche Streukapazitätsbeeinflussungen in der Nähe metallischer Komponenten angeordnet werden kann.

Abschließend seien noch einmal die wesentlichen Vorteile der erfindungsgemäßen Antennenanordnung zusammengefaßt. Zunächst ist ein wesentlicher Punkt der, daß nur eine einzige Antennenwindung und somit nur eine einzige Antenne existiert, weshalb auch nur ein Anpassungsnetzwerk nötig ist, und entsprechend auch nur eine einzige Abstimmstelle ohne andere Beeinflussungen. Dies führt dazu, daß die Anordnung einfach und billig ist und zudem relativ leicht auch von nicht ausgewiesenen Spezialisten abgestimmt werden kann. Die einfache Abstimmung kann auch automatisch durchgeführt werden. Aufgrund des einfachen Abstimmalgorithmus ist die Abstimmung ferner schnell möglich, weshalb auch eine dynamische Abstimmung während des Betriebs des Lesegeräts möglich ist. Dagegen ist die Abstimmung zweier getrennter Antennen gemäß dem Stand der Technik aufwendig und entsprechend langsam, weshalb eine dynamische Abstimmung mit solchen Antennen wenn überhaupt nur sehr schwierig erreicht werden kann.

Weiterhin führt die erfindungsgemäße Antennenform in ihren sämtlichen möglichen Ausgestaltungen, von denen nur einige in Fig. 2b dargestellt sind, zu einer Reduzierung der Spuleninduktivität. Während die Spuleninduktivität hauptsächlich durch die aufgespannte Rahmenfläche bestimmt wird, setzt sich die Resonanzkapazität aus der dafür vorgesehenen konzentrierten Schaltungskapazität und der Streukapazität der Umgebung zusammen. Damit kann, um den Einfluß der Streukapazitäten zu minimieren, die Schaltungskapazität für eine gleiche Resonanzfrequenz, d. h. eine Betriebsfrequenz für die Antennenanordnung, die zwischen 12 und 14 MHz liegt und bevorzugterweise 13,56 MHz ist, möglichst groß gewählt werden. Die "Parallelschaltung" (Mittelpunktspeisung) der beiden Teilschleifen führt zu der kleinsten Induktivität bei einer vorgegebenen Antennengröße.

Der gewählte Anschluß der beiden Leiterstreifen (entweder direkt oder gekreuzt) führt zu einer Ausbildung des magnetischen Feldes, das zwischen den beiden Leiterschleifen gleich- oder gegensinnig gerichtet ist. Dadurch wird gewährleistet, daß ein Transponder in allen Orientierungsrichtungen gelesen wird.

Durch das bevorzugte "Durchtauchen" der Transponder durch die Schleifen bei einem bevorzugten Ausführungsbeispiel der Erfindung befinden sich dieselben in dem Nahbereich der Antenne, d. h. die Leseabstände sind geringer als bei einer vergleichbare Gateantenne mit zwei seitlichen Rahmenantennen, wie sie bezüglich Fig. 7 dargestellt ist. Damit werden Systeme mit geringeren Reichweiten und damit auch geringeren Sendeleistungen sowohl auf Seiten der Antenne als auch auf Seiten der Transponder unterstützt. Durch die bevorzugterweise vorgesehene Neigung der beiden Teilschleifen können in einer Ebene beliebig ausgerichtete Transponder zuverlässig gelesen werden. Wenn zusätzlich die gegensinnige Feldorientierung gewählt wird, wie es bei der Antennenanordnung von Fig. 1 dargestellt ist, kann auch die dritte Orientierungsrichtung von Transpondern, also eine Ausrichtung senkrecht zur Transportrichtung, zuverlässig verarbeitet werden.

Ein weiterer wesentlicher Vorteil der erfindungsgemäßen Antennenanordnung besteht darin, daß die Geometrie derselben an bestehende Abmessungen zu identifizierender Objekte, wie z. B. genormter Postpakete, angepaßt werden kann. Der Abstand der beiden Teilschleifen 12, 14 bei der in Fig. 1 dargestellten bevorzugten Ausführungsform ist von der Bewegungsgeschwindigkeit und von der Länge des Transponderkommunikationsprotokolls abhängig und kann in großen Grenzen eingestellt werden.

Damit wird eine zuverlässige, preisgünstige und flexibel gestaltbare Antennenanordnung geschaffen, die in Verbindung mit einer Transponder-Leseeinrichtung besonders vorteilhaft eingesetzt werden kann.

## Patentansprüche

1. Transponder-Leseeinrichtung mit folgenden Merkmalen:

    einer Antennenanordnung, die folgende Merkmale aufweist:

       eine erste Teilschleife (12), die eine erste Fläche im wesentlichen umschließt und ein erstes und ein zweites Ende hat;

       eine zweite Teilschleife (14), die eine zweite Fläche im wesentlichen umschließt und ein erstes und ein zweites Ende hat,

       wobei die beiden ersten Enden der ersten und der zweiten Teilschleife (12, 14) miteinander verbunden sind, und wobei die zweiten Enden der ersten und der zweiten Teilschleife miteinander verbunden sind, derart, daß die beiden Teilschleifen zusammen eine einzige geschlossene Windung bilden; und

       eine einzige Speisungseinrichtung (16) zum Anlegen einer Spannung (+V, -V) zwischen den verbundenen ersten Enden und den verbundenen zweiten Enden,

       wobei die erste und die zweiten Teilschleife (12, 14) derart zueinander positioniert sind, daß eine durch die erste Fläche definierte erste Ebene und eine durch die zweite Fläche definierte von der ersten Ebene unterschiedliche zweite Ebene sich parallel oder in einem spitzen Winkel schneidend gegenüberliegen;

       einem Lesebereich (40), der in einem Nahbereich der ersten und der zweiten Teilschleife gebildet ist;

einer Einrichtung (42) zum Transportieren eines Objektes (44), an dem ein Transponder (20) angebracht ist, durch den Lesebereich (40),

wobei die Antennenanordnung ausgebildet ist, um in dem Lesebereich (40) ein inhomogenes Magnetfeld zu erzeugen, indem

a) die erste und die zweite Teilschleife der Antennenanordnung derart miteinander verbunden sind, daß die Stromflußrichtung in der ersten Teilschleife entgegengesetzt zu der Stromflußrichtung in der zweiten Teilschleife gerichtet ist, oder

b) die erste und die zweite Teilschleife der Antennenanordnung derart miteinander verbunden positioniert sind, daß die Stromflußrichtung in der ersten Teilschleife gleichsinnig zu der Stromflußrichtung in der zweiten Teilschleife gerichtet ist, und die Antennenanordnung schräg bezüglich der Einrichtung (42) zum Transportieren eines Objekts angeordnet ist.

2. Transponder-Leseeinrichtung nach Anspruch 1, bei der der Lesebereich (40) einen länglichen Raum aufweist, der sich entlang einer Lesebereichsachse erstreckt, wobei die erste und die zweite Teilschleife (12, 14) jeweils den länglichen Raum im wesentlichen umgeben und bezüglich der Lesebereichsachse voneinander beabstandet sind, derart, daß das Objekt (44), an dem der Transponder (20) angebracht ist, durch die erste und die zweite Teilschleife (12, 14) gebracht werden kann.

3. Transponder-Leseeinrichtung nach Anspruch 1, bei der die Antennenanordnung so in dem Lesebereich (40) angeordnet ist, daß die erste und die zweite Teilschleife (12, 14) links bzw. rechts bezüglich des Lesebereichs (40) angeordnet sind, derart, daß ein Objekt zwischen die Teilschleifen (12, 14) transportiert werden kann, das Objekt (44) jedoch nicht durch eine der Teilschleifen (12, 14) hindurch transportiert werden kann.

4. Transponder-Leseeinrichtung nach einem der Ansprüche 1 bis 3, bei der die Transporteinrichtung (42) ferner angeordnet ist, um das Objekt (44) durch den Lesebereich (40) kontinuierlich hindurchzubewegen.

5. Transponder-Leseeinrichtung nach einem der Ansprüche 1 bis 4, bei der die erste und die zweite Fläche parallel zueinander sind, einen länglichen Lesebereich jedoch in einem spitzen Winkel schneiden.

6. Transponder-Leseeinrichtung nach einem der Ansprüche 1 bis 4, bei der die erste und die zweite Fläche einen spitzen Winkel definieren und einen länglichen Lesebereich in unterschiedlichen Winkeln schneiden.

7. Transponder-Leseeinrichtung nach einem der Ansprüche 1 bis 6, bei der die Transporteinrichtung (42) als flaches Förderband (42) ausgestattet ist, das metallische Bestandteile aufweist.

8. Transponder-Leseeinrichtung nach einem der Ansprüche 1 bis 7, bei der die Antennenanordnung bezüglich der Transporteinrichtung (42) derart angeordnet ist, daß die ersten und die zweiten Enden, die mit der Speisungseinrichtung (16) verbunden sind, möglichst weit von der Transporteinrichtung (42) entfernt angeordnet sind, um Ableitströme über Streukapazitäten zu minimieren.

9. Transponder-Leseeinrichtung nach einem der Ansprüche 1 bis 8, bei der die erste Fläche und die zweite Fläche der Antennenanordnung ebene Flächen sind, die in der ersten und zweiten Ebene liegen.

10. Transponder-Leseeinrichtung nach Anspruch 1, bei der die erste und die zweite Fläche der Antennenanordnung im wesentlichen parallel zueinander sind, bei der die erste Teilschleife (12) und die zweite Teilschleife (14) der Antennenanordnung als nahezu vollständige Rahmen ausgebildet sind, die lediglich durch einen bestimmten Abstand zwischen den ersten und den zweiten Enden geöffnet sind, bei der die ersten und die zweiten Enden der ersten und der zweiten Teilschleife jeweils durch einen ersten (18a) bzw. einen zweiten (18b) Leiter miteinander verbunden sind, wobei der erste und der zweite Leiter (18a, 18b) der Antennenanordnung im wesentlichen senkrecht zu der ersten und der zweiten Fläche verlaufen und ferner gekreuzt sind, so daß sich die gegensinnigen Stromflußrichtungen in den beiden Teilschleifen ergeben.

11. Transponder-Leseeinrichtung nach einem der vorhergehenden Ansprüche, bei der die erste und die zweite Teilschleife (12, 14) der Antennenanordnung Flächen im wesentlichen umschließen, die rechteckförmig sind.

12. Transponder-Leseeinrichtung nach einem der vorhergehenden Ansprüche, bei der die Speisungseinrichtung (16) der Antennenanordnung ein Balun aufweist, um die Antennenanordnung symmetrisch zu speisen.

**13.** Transponder-Leseeinrichtung nach einem der vorhergehenden Ansprüche, die ferner eine Abstimmeinrichtung zum Abstimmen der Resonanzfrequenz der Antennenanordnung aufweist, wobei die Abstimmeinrichtung ein abstimmbares kapazitives Bauelement aufweist, das einen deutlich höheren Kapazitätswert hat, als Streukapazitäten zwischen der Antennenanordnung und einer Umgebung, in der die Antennenanordnung angeordnet ist.

**14.** Transponder-Leseeinrichtung nach einem der vorhergehenden Ansprüche, bei der die Antennenanordnung in einem Frequenzbereich zwischen 12 und 14 MHz betreibbar ist, wobei die beiden Flächen, die durch die beiden Teilschleifen (12, 14) im wesentlichen umspannt werden, zwischen 0,8 und 1,2 m2 liegen, wobei die Induktivität der Antennenanordnung deutlich kleiner ist als die Induktivität einer Antennenanordnung mit zwei Windungen, die jeweils die gleiche Fläche umspannen.

**Claims**

**1.** Transponder reading means comprising:

an antenna arrangement comprising:

a first partial loop (12) substantially enclosing a first face and having a first and a second end;

a second partial loop (14) substantially enclosing a second face and having a first and a second end,

wherein the two first ends of the first and the second partial loop (12, 14) are connected to each other, and wherein the second ends of the first and the second partial loop are connected to each other, such that the two partial loops together form a single closed winding; and

a single feeding means (16) for applying a voltage (+V, -V) between the two connected first ends and the connected second ends,

wherein the first and the second partial loop (12, 14) are positioned with respect to each other, such that a first plane defined by the first face and a second plane defined by the second face different from the first plain are opposed in parallel or intersecting at an acute angle;

a reading region (40) formed in a near region of the first and the second partial loop;

a means (42) for transporting an object (44) at which a transponder (20) is attached through the reading region (40),

wherein the antenna arrangement is formed to generate an inhomogeneous magnetic field in the reading region (40) by

a) the first and the second partial loop of the antenna arrangement being connected to each other, such that the current flow direction in the first partial loop is directed opposite to the current flow direction in the second partial loop, or

b) the first and the second partial loop of the antenna arrangement being positioned connected to each other, such that the current flow direction in the first partial loop is directed in the same sense as the current flow direction in the second partial loop, and the antenna arrangement is arranged obliquely with reference to the means (42) for transporting an object.

**2.** Transponder reading means of claim 1, wherein the reading region (40) comprises an elongated space extending along a reading region axis, wherein the first and the second partial loop (12, 14) each substantially surround the elongated space and are spaced from each other with reference to the reading region axis, such that the object (44) to which the transponder (20) is attached may be brought through the first and the second partial loop (12, 14).

**3.** Transponder reading means of claim 1, wherein the antenna arrangement is arranged in the reading region (40) so that the first and the second partial loop (12, 14) are arranged to the left and to the right with reference to the reading region (40), respectively, such that an object may be transported between the partial loops (12, 14), but the object (44) cannot be transported through one of the partial loops (12, 14).

**4.** Transponder reading means of one of claims 1 to 3, wherein the transport means (42) is further arranged to continuously move the object (44) through the reading region (40).

**5.** Transponder reading means of one of claims 1 to 4, wherein the first and the second face are parallel to each other, but intersect an elongated reading region at an acute angle.

**6.** Transponder reading means of one of claims 1 to 4, wherein the first and the second face define an acute angle and intersect an elongated reading region at different angles.

7. Transponder reading means of one of claims 1 to 6, wherein the transport means (42) is equipped as flat conveying belt (42) having metallic components.

8. Transponder reading means of one of claims 1 to 7, wherein the antenna arrangement is arranged with reference to the transport means (42), such that the first and the second ends connected to the feeding means (16) are arranged as far away from the transport means (42) as possible, to minimize leakage currents via stray capacitances.

9. Transponder reading means of one of claims 1 to 8, wherein the first face and the second face of the antenna arrangement are plane faces lying in the first and the second plane.

10. Transponder reading means of claim 1, wherein the first and the second face of the antenna arrangement are substantially parallel to each other, wherein the first partial loop (12) and the second partial loop (14) of the antenna arrangement are formed as almost complete frames only opened by a certain distance between the first and the second ends, wherein the first and the second ends of the first and the second partial loop are each connected to each other by a first (18a) and a second (18b) conductor, respectively, wherein the first and the second conductor (18a, 18b) of the antenna arrangement pass substantially perpendicularly to the first and the second face and are further crossed, so that the inverse current flow directions in the two partial loops result.

11. Transponder reading means of one of the preceding claims, wherein the first and the second partial loop (12, 14) of the antenna arrangement substantially enclose faces that are rectangular.

12. Transponder reading means of one of the preceding claims, wherein the feeding means (16) of the antenna arrangement comprises a balun, to symmetrically feed the antenna arrangement.

13. Transponder reading means of one of the preceding claims, further comprising a tuning means for tuning the resonance frequency of the antenna arrangement, wherein the tuning means comprises a tunable capacitive device having a significantly higher capacitance value than stray capacitances between the antenna arrangement and an environment in which the antenna arrangement is disposed.

14. Transponder reading means of one of the preceding claims, wherein the antenna arrangement is operable in a frequency range of 12 to 14 MHz, wherein the two faces substantially reached around by the two partial loops 12, 14 lie between 0.8 and 1.2 m2, wherein the inductance of the antenna arrangement is significantly smaller than the inductance of an antenna arrangement with two windings each reaching around the same face.

## Revendications

1. Dispositif de lecture de transpondeur aux caractéristiques suivantes :

   un aménagement d'antenne présentant les caractéristiques suivantes :

   une première boucle partielle (12) entourant substantiellement une première face et présentant une première et une deuxième extrémité ;
   une deuxième boucle partielle (14) entourant substantiellement une deuxième face et présentant une première et une deuxième extrémité,
   les deux premières extrémités de la première et de la deuxième boucle partielle (12, 14) étant connectées l'une à l'autre, et les deuxièmes extrémités de la première et de la deuxième boucle partielle étant connectées l'une à l'autre, de sorte que les deux boucles partielles constituent, ensemble, un seul enroulement fermé ; et
   un seul dispositif d'alimentation (16) destiné à appliquer une tension (+V, -V) entre les premières extrémités connectées et les deuxièmes extrémités connectées,
   la première et la deuxième boucle partielle (12, 14) étant positionnées l'une par rapport à l'autre de sorte qu'un premier plan défini par la première face et qu'un deuxième plan défini par la deuxième face, différent du premier plan, soient opposés l'un à l'autre, en parallèle ou se croisant selon un angle aigu ;

   une zone de lecture (40) formée à proximité de la première et de la deuxième boucle partielle ;
   un dispositif (42) destiné à transporter un objet (44) sur lequel est placé un transpondeur (20) à travers la zone de lecture (40),
   l'aménagement d'antenne étant réalisé de manière à générer, dans la zone de lecture (40), un champ magnétique non homogène, en ce que

a) la première et la deuxième boucle partielle de l'aménagement d'antenne sont connectées l'une à l'autre de sorte que la direction de circulation de courant dans la première boucle partielle soit orientée opposée à la direction de circulation de courant dans la deuxième boucle partielle, ou b) la première et la deuxième boucle partielle de l'aménagement d'antenne sont positionnées connectées l'une à l'autre de sorte que la direction de circulation de courant dans la première boucle partielle soit orientée dans le même sens que la direction de circulation de courant dans la deuxième boucle partielle, et que l'aménagement d'antenne est disposé oblique par rapport au dispositif destiné à transporter un objet.

2. Dispositif de lecture de transpondeur selon la revendication 1, dans lequel la zone de lecture (40) présente un espace allongé s'étendant le long d'un axe de zone de lecture, la première et la deuxième boucle partielle (12, 14) entourant, chacune, substantiellement l'espace allongé et étant distantes l'une de l'autre par rapport à l'axe de zone de lecture, de sorte que l'objet (44) sur lequel est placé le transpondeur (20) puisse être amené à travers la première et la deuxième boucle partielle (12, 14).

3. Dispositif de lecture de transpondeur selon la revendication 1, dans lequel l'aménagement d'antenne est disposé dans la zone de lecture (40) de sorte que la première et la deuxième boucle partielle (12, 14) soient disposées à gauche ou à droite par rapport à la zone de lecture (40), de sorte qu'un objet puisse être transporté entre les boucles partielles (12, 14), mais que l'objet (44) ne puisse toutefois pas être transporté à travers l'une des boucles partielles (12, 14).

4. Dispositif de lecture de transpondeur selon l'une des revendications 1 à 3, dans lequel le dispositif de transport (42) est, par ailleurs, disposé de manière à déplacer l'objet (44) en continu à travers la zone de lecture (40).

5. Dispositif de lecture de transpondeur selon l'une des revendications 1 à 4, dans lequel la première et la deuxième face sont parallèles entre elles, mais viennent toutefois en intersection avec une zone de lecture selon un angle pointu.

6. Dispositif de lecture de transpondeur selon l'une des revendications 1 à 4, dans lequel la première et la deuxième face définissent un angle aigu et viennent en intersection avec une zone de lecture allongée selon des angles différents.

7. Dispositif de lecture de transpondeur selon l'une des revendications 1 à 6, dans lequel le dispositif de transport (42) est réalisé sous forme de bande transporteuse plane (42) présentant des composants métalliques.

8. Dispositif de lecture de transpondeur selon l'une des revendications 1 à 7, dans lequel l'aménagement d'antenne est disposé par rapport au dispositif de transport (42) de sorte que les premières et les deuxièmes extrémités reliées au dispositif d'alimentation (16) soient disposées le plus loin possible du dispositif de transport (42), afin de minimiser les courants de fuite à travers des capacités parasites.

9. Dispositif de lecture de transpondeur selon l'une des revendications 1 à 8, dans lequel la première face et la deuxième face de l'aménagement d'antenne sont des faces planes situées dans le premier et le deuxième plan.

10. Dispositif de lecture de transpondeur selon la revendication 1,
dans lequel la première face et la deuxième face de l'aménagement d'antenne sont sensiblement parallèles entre elles,
dans lequel la première boucle partielle (12) et la deuxième boucle partielle (14) de l'aménagement d'antenne sont réalisées sous forme de cadres pratiquement complets qui ne sont ouverts que par une distance déterminée entre les premières et les deuxièmes extrémités,
dans lequel les premières et les deuxièmes extrémités de la première et de la deuxième boucle partielle sont, chacune, connectées entre elles par un premier (18a) ou un deuxième (18b) conducteur,
le premier et le deuxième conducteur (18a, 18b) de l'aménagement d'antenne s'étendent sensiblement perpendiculairement à la première et à la deuxième face et sont, par ailleurs, croisés, de sorte que soient obtenues les directions de circulation de courant en sens opposé dans les deux boucles partielles.

11. Dispositif de lecture de transpondeur selon l'une des revendications précédentes, dans lequel la première et la deuxième boucle partielle (12, 14) de l'aménagement d'antenne entourent substantiellement des faces qui sont rectangulaires.

12. Dispositif de lecture de transpondeur selon l'une des revendications précédentes, dans lequel le dispositif d'alimentation (16) de l'aménagement d'antenne présente un symétriseur d'antenne, pour alimenter l'aménagement d'antenne de manière symétrique.

**13.** Dispositif de lecture de transpondeur selon l'une des revendications précédentes, comprenant, par ailleurs, un dispositif de réglage destiné à régler la fréquence de résonance de l'aménagement d'antenne, le dispositif de réglage présentant un composant capacitif réglable ayant une valeur de capacité nettement supérieure que les capacités parasites entre l'aménagement d'antenne et un environnement dans lequel est disposé l'aménagement d'antenne.

**14.** Dispositif de lecture de transpondeur selon l'une des revendications précédentes, dans lequel l'aménagement d'antenne peut fonctionner dans une plage de fréquences comprise entre 12 et 14 MHz, les deux faces qui sont substantiellement entourées par les deux boucles partielles (12, 14) étant comprises entre 0,8 et 1,2 m$^2$, l'inductance de l'aménagement d'antenne étant nettement inférieure à l'inductance d'un aménagement d'antenne à deux enroulements entourant, chacun, la même face.

Fig.1

Fig.2a

Fig.2b

**14**

**12**

**22b**

**22a**

**20a**

**20b**

Z

Y

# Fig.3

Fig.4

Fig.5

Fig.6

Fig.7